(19) Europäisches Patentamt
European Patent Office
Office européen des brevets

(11) **EP 1 340 644 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(51) Int Cl.⁷: **B60K 23/04**

(21) Anmeldenummer: **03003984.6**

(22) Anmeldetag: **22.02.2003**

(54) **Verfahren zum Kalibrieren einer Steuervorrichtung einer Differentialsperre**

Method for calibrating the control device of a differential lock

Procédure de calibration du dispositif de commande d'un dispositif de blocage de différentiel

(84) Benannte Vertragsstaaten:
**AT DE FR GB SE**

(30) Priorität: **27.02.2002 DE 10208605**

(43) Veröffentlichungstag der Anmeldung:
**03.09.2003 Patentblatt 2003/36**

(73) Patentinhaber: **ZF FRIEDRICHSHAFEN Aktiengesellschaft 88038 Friedrichshafen (DE)**

(72) Erfinder: **Frühwirth, Gerhard 4274 Schönau (AT)**

(56) Entgegenhaltungen:
US-A- 4 681 185     US-A- 5 570 755
US-A- 5 676 219     US-A- 6 047 231

**Beschreibung**

Die Erfindung betrifft ein Verfahren zum Kalibrieren einer Vorrichtung zum Steuern von mindestens einer Differentialsperre mit den Merkmalen des Oberbegriffs des Anspruchs 1, wobei diese bekannten Maßnahmen dem hier fätigen Fachmann allgemein geläufig sind.

Sperrkupplungen in Achsdifferentialen werden bisher nur selbsttätig aktiviert, wenn Schlupf gemessen wurde. Zum korrekten Steuern von Differentialsperren ist der Schlupf genau zu ermitteln. Fahrzeugreifen unterscheiden sich in ihren Radumfängen bereits neu, wobei Hersteller Toleranzen im Prozentbereich angeben. Im Betrieb ändern sich Radumfänge durch Verschleiß insbesondere unterschiedlich. Bei hinterachsgetriebenen Fahrzeugen führt das Antriebsmoment zu größerem Schlupf an der Hinterachse als an der Vorderachse, so dass sich auch die Radumfänge durch Verschleiß an der Hinterachse stärker reduzieren. Wird bei der Berechnung zum Steuern ein fiktiver, fixer Radumfang zugrundegelegt, ergeben sich bei tatsächlich unterschiedlichen Umfängen an den einzelnen Rädern unterschiedliche Drehzahlen, die von der Vorrichtung zum Steuern als Schlupf erfasst werden und die Steuerung verfälschen können.

Die DE 44 27 040 C2 offenbart zur Vermeidung von zu spätem Einrücken und zu häufigem Lösen und Wiedereinrücken einer als Differentialsperre wirkenden Sperrkupplung in einer Antriebsachse eines Kraftfahrzeugs in schwerem Gelände oder bei Winterbetrieb ein Verfahren zur Steuerung der als Differentialsperre wirkenden Sperrkupplung, wobei das Steuersignal für eine zeitlich begrenzte Betätigung der Sperrkupplung aus Drehzahldifferenzen zwischen den Rädern der Antriebsachse durch Bildung einer Querschlupfsumme abgeleitet wird. Die Steuerung der Beaufschlagungszeit erfolgt gemäß der DE 44 27 040 C2 in Abhängigkeit von weiteren Signalen, wie Zustand des Kupplungspedals, Lenkwinkel, Motorleistung und Massenträgheitsmomenten, bei nur kurzzeitiger Beaufschlagung und praktischen und zutreffenden Ausrückkriterien für die erwähnten Fahrzustände in einfacher Weise.

Bekannt ist aus der Beschreibungseinleitung der EP 0 510 457 eine formschlüssige Kupplung für Verteiler- und Ausgleichs-getriebe, die u. a. vor Erreichen von schwierigem Gelände vom Fahrer des Fahrzeugs von Hand einzulegen ist. Wenn die Kupplung eingerückt ist, sind die jeweiligen Antriebsstränge starr verbunden, und Ausrücken muß gegen die Reibung zwischen den durch das übertragene Moment gegeneinander gepreßten Kupplungsflächen erfolgen. Formschlüssige Kupplungen gemäß der EP 0 510 457 werden selbsttätig ausgerückt und bei Überschreiten von Drehzahldifferenzschwellen eingerückt. Zusätzlich zu den Drehzahldifferenzschwellen wird auch das Einrücken bei zu hohen Geschwindigkeiten unterbunden, d. h. es werden auch Geschwindigkeiten erfasst und berücksichtigt. Zudem ist ein Komparator vorgesehen, der mit einem Fehlerkompensationsrechner verbunden ist, mit dem über die gesamte Lebensdauer des Fahrzeugs der Verschleiß der Fahrzeugbereifung erfasst und berücksichtigt werden kann. Hierzu werden Drehzahldifferenzen an Radantriebssträngen ermittelt, so dass Abweichungen der Raddurchmesser die Drehzahldifferenzschwellen nicht verfälschen können. Um das Korrektursignal nicht nur bei Geradeausfahrt zu erzeugen, ist ein Lenkwinkelsensor mit dem Fehlerkompensationsrechner verbunden. Nachteilig bei dem oben genannten Stand der Technik ist es, daß die Abweichungen der Raddurchmesser nur mit erheblichem Aufwand bei unzureichender Genauigkeit erfasst und berücksichtigt werden können.

Aufgabe der Erfindung ist es, ein Verfahren zum Kalibrieren einer Vorrichtung zum Steuern von mindestens einer Differentialsperre im Antriebsstrang von Kraftfahrzeugen zu schaffen, mit dem Abweichungen der Raddurchmesser bei geringem Aufwand und ausreichender Genauigkeit erfasst und berücksichtigt werden können.

Die Lösung erfolgt mit einem Verfahren zum Kalibrieren einer Vorrichtung zum Steuern von mindestens einer Differentialsperre im Antriebsstrang von Kraftfahrzeugen mit den Merkmalen des Anspruchs 1.

Gemäß der Erfindung sind für ein Verfahren zum Kalibrieren einer Vorrichtung zum Steuern von mindestens einer Differentialsperre im Antriebsstrang von Kraftfahrzeugen Sensoren vorgesehen, die Impulse entsprechend der jeweiligen Drehung von mit dem mindestens einen Differential verbundenen Rädern bilden, die der Steuervorrichtung zugeführt werden, zum Erfassen der Geschwindigkeit des Fahrzeugs und, um in Abhängigkeit von den ermittelten Radgeschwindigkeiten eine Sperrkupplung des Differentials zu steuern. Dabei werden Unterschiede von Radumfängen ermittelt, indem die Impulse von jedem Radsensor über ein vorgegebenes Intervall aufsummiert und einem Rechenwerk zum Abgleich mit den über das selbe Intervall aufsummierten Werten der anderen Räder des Antriebsstrangs zugeführt werden. Gemäß der Erfindung wird eine Mindestgeschwindigkeit bestimmt, ab der die Summationen der Impulse durchgeführt werden. Die Summationen werden wiederholt und ein endgültiger Wert aus den Summationen der Impulse bestimmt, so dass eine Auflösung der Abweichungen der Raddurchmesser im 0,1-%-Bereich erreicht wird, der zur Korrektur der Steuerung der Differentialsperre der Steuervorrichtung zugeführt wird. Die Forderung einer Mindestgeschwindigkeit ergibt zwangsläufig, dass für die Lenkradbewegungen nur kleine Änderungen gegenüber der Geradeausstellung möglich sind. Die kleinen Kurvenradien bei großen Lenkradbewegungen würden zu hohen Querbeschleunigungen führen, was einer normalen Fahrweise auf Straßen widerspricht. Verbleibende Abweichungen von der Geradeausfahrt sollten durch die Summation der Impulse über eine vorgegebene Fahrstrecke herausfallen. Das erfindungsgemäße Verfahren ermöglicht mit wenigen Einflußgrößen, wie den Radgeschwindigkeiten oder den Radimpulsen, dass Abweichungen der Raddurchmesser mit ausreichender Genauigkeit erfasst und berücksichtigt werden können ohne Berücksichtigung insbesondere von Lenkradpositionen und/oder Fahrzeuggeometrie und so falsche Ansteuerungen.

Gemäß einer bevorzugten Ausgestaltung der Erfindung wird durch Zählen der Impulse von jedem Rad über ein vorgegebenes Intervall von 500 m bis 1 000 m eine größere Wegstrecke erfasst, die sich in der Regel durch Mittelung von Links- und Rechtskurven annähernd zu einer Geraden ergibt.

Gemäß einer weiteren bevorzugten Ausgestaltung der Erfindung wird eine Mindestgeschwindigkeit von ca. 45 bis 60 km/h bestimmt, bei deren Unterschreitung die Zählungen der Impulse abgebrochen werden. Nach Überschreiten der Mindestgeschwindigkeit werden die Zählungen der Impulse wieder aufgenommen.

Gemäß einer weiteren bevorzugten Ausgestaltung der Erfindung wird ein Grenzwert bestimmt in Form eines Motormoments von vorzugsweise 50 % des Nennmomentes, ab dem die Zählungen der Impulse abgebrochen werden, so dass für das erfindungsgemäße Verfahren keine Schlupfanteile aus hohen Antriebsmomenten berücksichtigt werden.

Gemäß einer weiteren bevorzugten Ausgestaltung der Erfindung wird Bremsen berücksichtigt für den Abbruch der Zählungen der Impulse, so dass für das erfindungsgemäße Verfahren keine Schlupfanteile aus unbekannten Bremskräften berücksichtigt werden.

Gemäß einer weiteren bevorzugten Ausgestaltung der Erfindung werden bei Zuschalten einer Differentialsperre im Antriebsstrang die Zählungen der Impulse abgebrochen und erst wieder zugelassen, wenn alle Differentialsperren wieder offen sind, denn bei eingelegten Differentialsperren ergibt sich zwangsläufig Impulsgleichheit und somit Drehzahlgleichheit für die über die Differentialsperre verbundenen Räder, was zu einer Verringerung der tatsächlichen Unterschiede und zu einer fehlerhaften Kalibrierung führen würde.

Gemäß einer weiteren bevorzugten Ausgestaltung der Erfindung berechnet sich nach dem vorgegebenen Intervall für eine Quersperre der Unterschied zu:

$$\text{Unterschied} = (\text{Summe Impulse rechtes Rad} - \text{Summe Impulse linkes Rad})/(\text{Summe Impulse rechtes Rad} + \text{Summe Impulse linkes Rad})*2.$$

Aus dem Messwert des Unterschieds, bezogen auf die Quersperre und der zugrunde gelegten mittleren Geschwindigkeit der Achse, erhält man die auf Grund der Unterschiede der Radumfänge auftretenden Geschwindigkeitsdifferenzen oder Drehzahldifferenzen an der jeweiligen Quersperre.

Gemäß einer weiteren bevorzugten Ausgestaltung der Erfindung werden mindestens 20 000 Impulse pro Zählung berücksichtigt, so dass mit großen Zahlen für die Impulssummen hohe Genauigkeit erreicht wird.

Gemäß einer weiteren bevorzugten Ausgestaltung der Erfindung erfolgt Wiederholen der Summationen der Impulse zur Bildung von vier Messreihen und Mitteln der Messreihen für verbesserte Genauigkeit.

Gemäß einer weiteren bevorzugten Ausgestaltung der Erfindung wird durch Ausscheiden der Minimal- und Maximalwerte der vier Messreihen und Mitteln der verbleibenden Werte der Messreihen die Genauigkeit des im Steuergerät dann zur Korrektur verwendeten, endgültigen Werts weiter verbessert.

Gemäß einer weiteren bevorzugten Ausgestaltung der Erfindung wird durch Aufintegrieren der über Can-Bus übermittelten Radgeschwindigkeiten zu einer Wegstrecke für das erfindungsgemäße Verfahren zum Kalibrieren einer Vorrichtung zum Steuern von mindestens einer Differentialsperre die für ein ABS bereits vorgesehene Hardware mit herangezogen.

Die Erfindung wird im folgenden anhand eines Ausführungsbeispiels dargestellt.

Ein Verfahren zum Kalibrieren einer Vorrichtung zum Steuern einer Differentialsperre im Antriebsstrang von Kraftfahrzeugen weist Sensoren auf, die Impulse entsprechend der jeweiligen Drehung von mit dem Differential verbundenen Rädern bilden, die der Steuervorrichtung zugeführt werden, zum Erfassen der Geschwindigkeit des Fahrzeugs und, um in Abhängigkeit von den Impulsen eine Sperrkupplung des Differentials zu steuern. Dabei werden Unterschiede von Radumfängen ermittelt, indem die Impulse von jedem Rad über ein vorgegebenes Intervall aufsummiert und einem Komparator zum Abgleich mit den über das selbe Intervall aufsummierten Werten der anderen Räder des Antriebsstrangs zugeführt werden.

Es wird eine Mindestgeschwindigkeit vorgegeben, ab der die Summationen der Impulse durchgeführt werden. Die Summationen werden wiederholt und ein endgültiger Wert aus den Summationen der Impulse bestimmt, so dass eine Auflösung der Abweichungen der Raddurchmesser im 0,1 % Bereich erreicht wird, der zur Korrektur der Steuerung der Differentialsperre der Steuervorrichtung zugeführt wird. Die Forderung einer Mindestgeschwindigkeit ergibt zwangsläufig, dass für die Lenkradbewegungen nur kleine Änderungen gegenüber der Geradeausstellung möglich sind. Die kleinen Kurvenradien bei großen Lenkradbewegungen würden zu hohen Querbeschleunigungen führen, was einer normalen Fahrweise auf Straßen widerspricht. Verbleibende Abweichungen von der Geradeausfahrt sollten durch die Summation der Impulse über ein vorgegebenes Intervall herausfallen.

Das Zählen der Impulse von jedem Rad erfolgt über ein vorgegebenes Intervall von 500 m bis 1 000 m.

**Patentansprüche**

1. Verfahren zum Kalibrieren einer Vorrichtung zum Steuern von mindestens einer Differentialsperre im Antriebsstrang von Kraftfahrzeugen mit Sensoren, die Impulse entsprechend der jeweiligen Drehung von mit dem mindestens einen Differential verbundenen Rädern bilden, die der Steuervorrichtung zugeführt werden, zum Erfassen der Geschwindigkeit des Fahrzeugs und, um in Abhängigkeit von den Impulsen eine Sperrkupplung des Differentials zu steuern, wobei die Unterschiede von Radumfängen ermittelt werden, indem die Impulse von jedem Rad über ein vorgegebenes Intervall aufsummiert und einem Rechenwerk zum Abgleich mit den über das selbe Intervall aufsummierten Werten der anderen Räder des Antriebsstrangs zugeführt werden, **gekennzeichnet durch**

   - Bestimmen einer Mindestgeschwindigkeit, ab der die Summationen der Impulse durchgeführt werden,
   - Wiederholen der Summationen,
   - Bestimmen von mindestens einem Wert aus den Summationen der Impulse und
   - Zuführen dieses Wertes zu der Steuervorrichtung zur Korrektur der Steuerung der Differentialsperre.

2. Verfahren gemäß Anspruch 1, **gekennzeichnet durch** Zählen der Impulse von jedem Rad über ein vorgegebenes Intervall von 500 m bis 1 000 m.

3. Verfahren gemäß Anspruch 1, **gekennzeichnet durch** Bestimmen einer Mindestgeschwindigkeit, ab der die Zählungen der Impulse abgebrochen werden.

4. Verfahren gemäß Anspruch 1, **gekennzeichnet durch** Bestimmen eines Grenzwerts für ein Motormoment von vorzugsweise 50 % des Nennmomentes, ab dem die Zählungen der Impulse abgebrochen werden.

5. Verfahren gemäß Anspruch 1, **gekennzeichnet durch** Berücksichtigen des Bremsens für den Abbruch der Zählungen der Impulse.

6. Verfahren gemäß Anspruch 1, **gekennzeichnet durch** Berücksichtigen des Zuschaltens einer Differentialsperre im Antriebsstrang für den Abbruch der Zählungen der Impulse.

7. Verfahren gemäß Anspruch 1 und 2, **gekennzeichnet durch** Berechnen nach dem vorgegebenen Intervall für eine Quersperre des Unterschieds zu:

   Unterschied = (Summe Impulse rechtes Rad - Summe Impulse linkes Rad)/(Summe Impulse rechtes Rad + Summe

   Impulse linkes Rad)*2.

8. Verfahren gemäß Anspruch 1, **gekennzeichnet durch** Berücksichtigen von mindestens 20 000 Impulsen pro Zählung.

9. Verfahren gemäß Anspruch 1, **gekennzeichnet durch** Wiederholen der Summationen der Impulse zur Bildung von vier Messreihen und Mitteln der Messreihen.

10. Verfahren gemäß Anspruch 9, **gekennzeichnet durch** Ausscheiden der Minimal- und Maximalwerte der vier Messreihen und Mitteln der Messreihen aus den verbleibenden Werten.

11. Verfahren gemäß Anspruch 1, **gekennzeichnet durch** Aufintegrieren der aus einem Can-Bus übermittelten Radgeschwindigkeiten zu einer Wegstrecke.

**Claims**

1. Method for calibrating a device for controlling at least one differential lock in the drive train of motor vehicles with sensors which form pulses according to the respective rotation of wheels connected to the at least one differential which are fed to the control device for detecting the speed of the vehicle and, in accordance with the pulses, for controlling a locking clutch of the differential, wherein wheel circumference differences are established by summing the pulses from each wheel over a predetermined interval and feeding them to an arithmetic logic unit for comparison with the values from the other wheels of the drive train which are summed over the same interval, **characterised by**

   - determining a minimum speed as from which the summations of the pulses take place,
   - repeating the summations,
   - determining at least one value from the summations of the pulses and
   - feeding this value to the control device to correct the control of the differential lock.

2. Method according to Claim 1, **characterised by** counting the pulses from each wheel over a predetermined interval of 500 m to 1,000 m.

3. Method according to Claim 1, **characterised by** determining a minimum speed as from which the pulse counts are discontinued.

4. Method according to Claim 1, **characterised by** determining a limit value for an engine torque of preferably 50 % of the rated torque, as from which value the pulse counts are discontinued.

5. Method according to Claim 1, **characterised by** taking account of braking for the discontinuation of the pulse counts.

6. Method according to Claim 1, **characterised by** taking account of the engagement of a differential lock in the drive train for the discontinuation of the pulse counts.

7. Method according to Claims 1 and 2, **characterised by** calculating the difference after the predetermined interval for an axle differential lock as:

   Difference = (sum of pulses of right-hand wheel - sum of pulses of left-hand wheel)/ (sum of pulses of right-hand wheel + sum of pulses of left-hand

   wheel)*2.

8. Method according to Claim 1, **characterised by** taking account of at least 20,000 pulses per count.

9. Method according to Claim 1, **characterised by** repeating the summations of the pulses to form four measurement series and averaging the measurement series.

10. Method according to Claim 9, **characterised by** eliminating the minimum and maximum values of the four measurement series and averaging the measurement series from the remaining values.

11. Method according to Claim 1, **characterised by** integrating the wheel speeds transmitted from a CAN bus into a distance.

**Revendications**

1. Procédé de calibrage d'un dispositif pour la commande d'au moins un dispositif de verrouillage différentiel dans la chaîne cinématique de véhicules avec des capteurs qui génèrent des impulsions en fonction de la rotation de roues reliées au différentiel, qui sont entrées dans le dispositif de commande, pour la mesure de la vitesse du véhicule et pour commander, en fonction des impulsions, un embrayage de verrouillage du différentiel, les différences entre les circonférences des roues étant déterminées grâce au fait que les impulsions provenant de chaque roue sont additionnées sur un intervalle prédéterminé et introduites dans un circuit de calcul pour une compensation à l'aide des valeurs additionnées des autres roues de la chaîne cinématique sur le même intervalle, **caractérisé par**:

- la détermination d'une vitesse minimale à partir de laquelle les additions des impulsions sont effectuées,
- la répétition des additions,
- la détermination d'au moins une valeur à partir des additions des impulsions et
- l'introduction de cette valeur dans le dispositif de commande pour la correction de la commande du dispositif de verrouillage du différentiel.

**2.** Procédé selon la revendication 1,**caractérisé par** le comptage des impulsions provenant de chaque roue sur un intervalle prédéterminé de 500 m à 1000 m.

**3.** Procédé selon la revendication 1, **caractérisé par** la détermination d'une vitesse minimale à partir de laquelle les comptages des impulsions sont interrompus.

**4.** Procédé selon la revendication 1, **caractérisé par** la détermination d'une valeur limite pour un couple moteur représentant de préférence 50% du couple nominal, à partir duquel les comptages des impulsions sont interrompus.

**5.** Procédé selon la revendication 1, **caractérisé par** la prise en compte du freinage pour l'interruption des comptages des impulsions.

**6.** Procédé selon la revendication 1, **caractérisé par** la prise en compte de la fermeture d'un dispositif de verrouillage du différentiel dans la chaîne cinématique pour l'interruption des comptages des impulsions.

**7.** Procédé selon la revendication 1 et 2, **caractérisé par** le calcul sur l'intervalle prédéterminé pour un verrouillage transversal de la différence, selon la formule suivante:

Différence = (somme impulsions roue droite - somme impulsions roue

gauche) / (somme impulsions roue + somme impulsions roue

gauche)*2

**8.** Procédé selon la revendication 1, **caractérisé par** la prise en compte d'au moins 20'000 impulsions par comptage.

**9.** Procédé selon la revendication 1, **caractérisé par** la répétition des additions des impulsions pour la génération de quatre séries de mesures et la détermination de la moyenne des séries de mesures.

**10.** Procédé selon la revendication 9, **caractérisé par** l'élimination des valeurs minimales et maximales des quatre séries de mesures et la détermination de la moyenne des séries de mesures à partir des valeurs restantes.

**11.** Procédé selon la revendication 1, **caractérisé par** l'intégration des vitesses des roues transmises par un bus CAN sur un trajet.